# EUROPÄISCHE PATENTSCHRIFT

(11) **EP 2 556 028 B1**
(45) Veröffentlichungstag und Bekanntmachung des Hinweises auf die Patenterteilung: **24.09.2014**
(21) Anmeldenummer: 11707183.7
(22) Anmeldetag: 10.03.2011
(51) Int. Cl.: C01G 49/04, C01G 49/00, C01G 49/02, C01G 49/06, C01G 49/08, C09C 1/24

(54) **JANUSARTIGE EISEN-SILICIUM-OXIDPARTIKEL**
JANUS-LIKE IRON-SILICON-OXIDE PARTICLES
PARTICULES D'OXYDE DE FER-SILICIUM DE TYPE JANUS

(30) Priorität: 06.04.2010 DE 102010003649
(43) Veröffentlichungstag der Anmeldung: 13.02.2013
(73) Patentinhaber: Evonik Degussa GmbH, 45128 Essen (DE)
(72) Erfinder: KATUSIC, Stipan, 65812 Bad Soden (DE); KRESS, Peter, 63791 Karlstein (DE); HERZOG, Harald, 63791 Karlstein (DE)
(86) Internationale Anmeldenummer: PCT/EP2011/053586
(87) Internationale Veröffentlichungsnummer: WO 2011/124436

(56) Entgegenhaltungen:
- EP-A1- 1 284 485
- EP-A1- 2 000 439
- NAN ZHAO, MINGYUAN GAO: "Magnetic Janus particles prepared by a flame synthetic approach: synthesis, characterizations and properties", ADV. MATER, Bd. 21, 12. Januar 2009 (2009-01-12), Seiten 184-187, XP002631766, weinheim DOI: 10.1002/adma.200800570

## Beschreibung

Die Erfindung betrifft sphärische und/oder sphäroide Eisen-Silicium-Oxidpartikel, die zwei Abschnitte aufweisen, wobei ein Abschnitt im Wesentlichen aus amorphem Siliciumdioxid und der andere Abschnitt im Wesentlichen aus Eisenoxid besteht. Die Erfindung betrifft ferner ein Verfahren zu deren Herstellung und deren Verwendung.

In Adv. Mater. 21 (2009), 184-187 wird ein vereinfachtes Verfahren zur Herstellung von sogenannten Januspartikeln aus Siliciumdioxid und Maghemit offenbart. Bei diesen Januspartikeln handelt es sich um sphärische Partikel mit einer mittleren Partikelgröße von 71 ± 33 nm, bei denen eine Hemisphäre aus amorphem Siliciumdioxid, die andere Hemisphäre überwiegend aus Maghemit besteht. Die Januspartikel werden erhalten, indem eine Lösung aus Methanol und nahezu äquimolaren Mengen von Eisen-(III)-actylacetonat und Tetraethoxysilan, in einer Flamme verbrannt wird. Wesentlich dabei ist, dass im Gegensatz zu den üblichen Spraypyrolyseverfahren nicht mittels eines Gases verdüst wird und dass die Beladung der Flamme deutlich verringert wird. Die Veröffentlichung offenbart nicht, dass die magnetischen Eigenschaften dieser JanusPartikel variiert werden können. Nachteilig bei diesem Verfahren ist die Tatsache, dass die erzielten Mengen sich auf Labormaßstab beziehen und eine Übertragung auf ein Verfahren im technischen Maßstab aus der Offenbarung nicht abzuleiten ist.

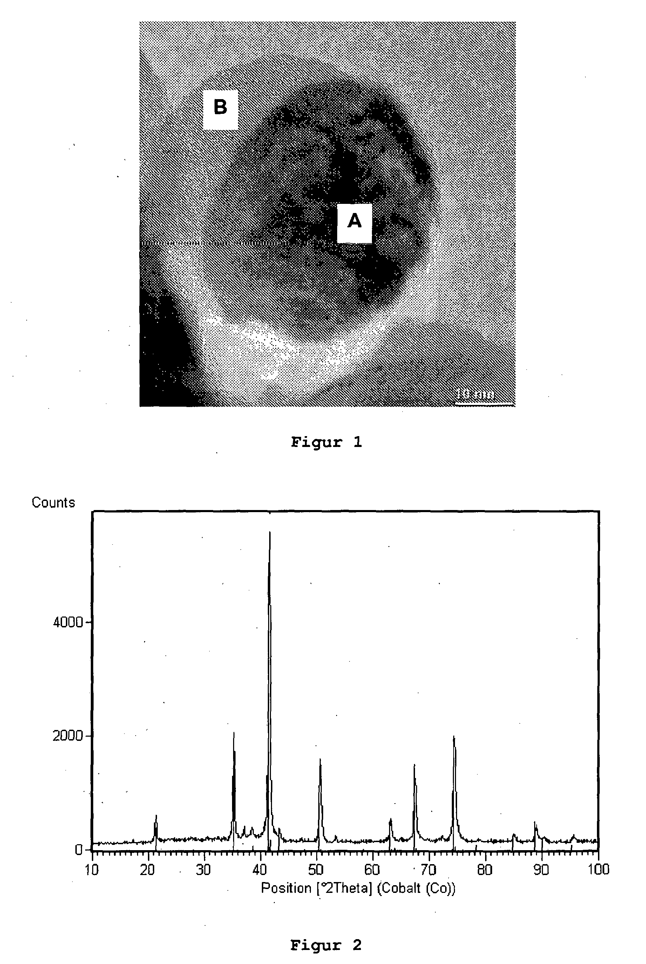

Dagegen sind im Stand der Technik Verfahren zur Herstellung von Silicium-Eisen-Mischoxiden bekannt, die jedoch nicht in Form von Janus-Partikeln vorliegen. So ist aus EP-A-1284485 Silicium-Eisen-Mischoxidpartikel bekannt, bei denen entweder Domänen einer Mischoxidkomponente in oder auf einer Matrix der mengenmäßig größeren Mischoxidkomponente vorliegen. WO 2008/148588 offenbart ein Silicium-Eisen-Mischoxidpulver in Form aggregierter, räumlich voneinander getrennter Bereiche von Siliciumdioxid und Eisenoxid mit einem mittleren Partikeldurchmesser des Eisenoxides von 2 bis 100 nm. Bei den Aggregaten handelt es sich um dreidimensionale Strukturen, wie sie Figur 1 in WO 2008/148588 zeigt. Figur 1 zeigt weiterhin schematisch die Verteilung der Mischoxidkomponenten in einem Primärpartikel. Weiterhin wird offenbart, dass das Siliciumdioxid als Mischoxidkomponente eine Hülle um das Eisenoxid ausbilden kann und die Eisenoxidphasen Maghemit und Magnetit überwiegen können. Das Silicium-Eisen-Mischoxidpulver wird durch Flammenspraypyrolyse einer dampfförmigen Chlorsiliciumverbindung und einer wässerigen Eisenchloridlösung hergestellt.

Die technische Aufgabe der vorliegenden Erfindung war es daher Partikel bereitzustellen, die die besonderen chemischen und physikalischen Eigenschaften der Januspartikel aufweisen und deren magnetische Eigenschaften an die jeweilige Anwendung angepasst werden können. Eine weitere Aufgabe der Erfindung war es, ein Verfahren zur Herstellung dieser Partikel bereitzustellen, das es erlaubt Mengen in technischen Dimensionen zu erzielen.

Gegenstand der Erfindung sind Eisen-Silicium-Oxidpartikel in sphärischer und/oder sphäroider Form, die zwei Abschnitte aufweisen, wobei ein Abschnitt im Wesentlichen aus amorphem Siliciumdioxid und der andere Abschnitt im Wesentlichen aus Eisenoxid besteht und bei denen
a) der Anteil an Siliciumdioxid oder Eisenoxid, berechnet als Fe₂O₃, 10 bis 90 Gew.-% beträgt und
b) der Eisenoxidanteil
   5 bis 75 Gew.-% Maghemit,
   20 bis 90 Gew.-% Magnetit,
   0 bis 15 Gew.-% Hämatit,
   0 bis 5 Gew.-% beta-Fe₂O₃ umfasst.

Die erfindungsgemäßen Eisen-Silicium-Oxidpartikel, liegen bevorzugt überwiegend, das heißt zu mehr als 50%, in der Regel zu mehr als 80 %, jeweils bezogen auf die Summe der Partikel, in sphärischer und/oder sphäroider vor, wobei sie zwei Abschnitte aufweisen, einer im Wesentlichen bestehend aus amorphem Siliciumdioxid, der andere im Wesentlichen bestehend aus Eisenoxid. Der Anteil kann durch die dem Fachmann bekannte Methoden, wie beispielsweise Auszählung von TEM Aufnahmen, bestimmt werden. Die Struktur der Eisen-Silicium-Oxidpartikel kann durch elektronenmikroskopische Aufnahmen (TEM) ermittelt werden. Figur 1 zeigt erfindungsgemäße Partikel. Die Partikel sind fast mittig von einer konkaven Phasengrenze durchzogen, die eine Eisenoxid-Hälfte (dunkel), gekennzeichnet mit A, von einer Siliciumdioxid-Hälfte (hell), gekennzeichnet mit B, trennt. Die erfindungsgemäßen Partikel liegen bevorzugt als isolierte Einzelpartikel vor.

Die erfindungsgemäßen Eisen-Silicium-Oxidpartikel zeigen in den Röntgendiffraktogrammen Reflexe, die den Eisenoxidphasen Maghemit, Magnetit, Hämatit und beta-Fe₂O₃ zuordenbar sind. Der Siliciumdioxidanteil der erfindungsgemäßen Partikel ist röntgenamorph. Weiterhin können röntgenamorphe Eisenoxidanteile mit einem Anteil von bis zu 10 Gew.-%, bezogen auf die Gesamtmenge der Eisenoxide, vorliegen. Der Anteil dieser röntgenamorphen Eisenoxide kann aus dem Röntgendiffraktogrammen abgeschätzt werden.

Bevorzugt können Eisen-Silicium-Oxidpartikel sein, deren Anteil an Maghemit und Magnetit in Summe größer als 80 Gew.-%, besonders bevorzugt größer als 90 Gew.-%, bezogen jeweils auf den Eisenoxidanteil, ist. Solche Partikel weisen bei der Anregung im magnetischen oder elektromagnetischen Wechselfeld eine hohe maximal erzielbare Temperatur auf.

Weiterhin können Eisen-Silicium-Oxidpartikel bevorzugt sein, bei denen der Anteil an von Eisenoxid 40 bis 90 Gew.-% und der Anteil an Siliciumdioxid 10 bis 60 Gew.-% ist. In einer solchen Ausführungsform liegen die Partikel annähernd oder weitestgehend in Form vor, die Hemisphären von Eisenoxid und Siliciumdioxid zeigt. Die Bestimmung der Zusammensetzung kann durch dem Fachmann bekannte Verfahren, wie beispielsweise Röntgenfluoreszenzanalyse (RFA), bestimmt werden.

Die Summe der Anteile aus Eisenoxid und Siliciumdioxid in den erfindungsgemäßen Partikeln beträgt in der Regel wenigstens 98 Gew.-%, bevorzugt wenigstens 99 Gew.-%. Darüber hinaus können die erfindungsgemäßen Partikel 0,01 bis 0,1 Gew.-% Kohlenstoff enthalten.

Weiterhin beträgt die BET-Oberfläche der erfindungsgemäßen Eisen-Silicium-Oxidpartikel bevorzugt 1 bis 100 m²/g, besonders bevorzugt 10 bis 70 m²/g und ganz besonders bevorzugt 15 bis 35 m²/g.

Ein weiterer Gegenstand der Erfindung ist ein Verfahren zur Herstellung der Eisen-Silicium-Oxidpartikel, bei dem man in einem die aufeinanderfolgenden Zonen Reaktionszone I, Reaktionszone II, Kühlzone und Abtrennzone umfassenden Reaktor
a) in der Reaktionszone I ein oder mehrere hydrolysierbare und/oder oxidierbare Siliciumverbindungen, gegebenenfalls zusammen mit einem Traggas, und ein Aerosol, das eine oder mehrere oxidierbare und/oder hydrolysierbare Eisenverbindungen enthält, in einem Verhältnis zusammenführt, dass das Gemisch 10 bis 90 Gew.-%, bevorzugt 40 bis 90 Gew.-%, der Eisenverbindungen, gerechnet als Fe₂O₃, und 90 bis 10 Gew.-% der Siliciumverbindungen, bevorzugt 10 bis 60 Gew.-%, gerechnet als SiO₂, und jeweils bezogen auf die Summe der Eisen- und Siliciumverbindungen, enthält,
b) dieses Gemisch mittels einer indirekten Flamme verdampft, wobei die indirekte Flamme durch Zündung eines Gemisches, welches Luft oder mit Sauerstoff angereicherte Luft und ein oder mehrere wasserstoffhaltige Brenngase umfasst, enthält und wobei die Menge an Sauerstoff wenigstens ausreicht um eine vollständige Umsetzung der wasserstoffhaltigen Brenngase und der hydrolysierbaren und/oder oxidierbare Siliciumverbindungen und Eisenverbindungen zu gewährleisten, wobei man die apparativen Bedingungen so wählt, dass dieser Dampf in Form einer laminaren Strömung, bevorzugt mit einer mit einer mittleren Geschwindigkeit von weniger als 4 ms⁻¹, besonders bevorzugt von 1 bis 4 ms⁻¹, die Reaktionszone I verläßt und
c) in die Reaktionszone II gelangt, wo er mit dem noch vorhandenen Sauerstoff und den Reaktionsprodukten, die bei der Erzeugung der indirekten Flamme gebildet werden, reagiert, wobei auch in der Reaktionszone II laminare Strömungsverhältnisse vorliegen, bevorzugt die mittlere Geschwindigkeit der Strömung bevorzugt kleiner ist, als die in der Reaktionszone I, und wobei die mittlere Verweilzeit des Reaktionsgemisches in der Reaktionszone II wenigstens 1 s, bevorzugt 1 bis 10 s, besonders bevorzugt 3 bis 7 s, ist,
d) anschließend in der Kühlzone das Reaktionsgemisch durch Einspeisung von Wasser auf Temperaturen von 200 bis 400°C kühlt, und
e) nachfolgend in der Abtrennzone den Feststoff von gas- oder dampfförmigen Stoffen abtrennt.

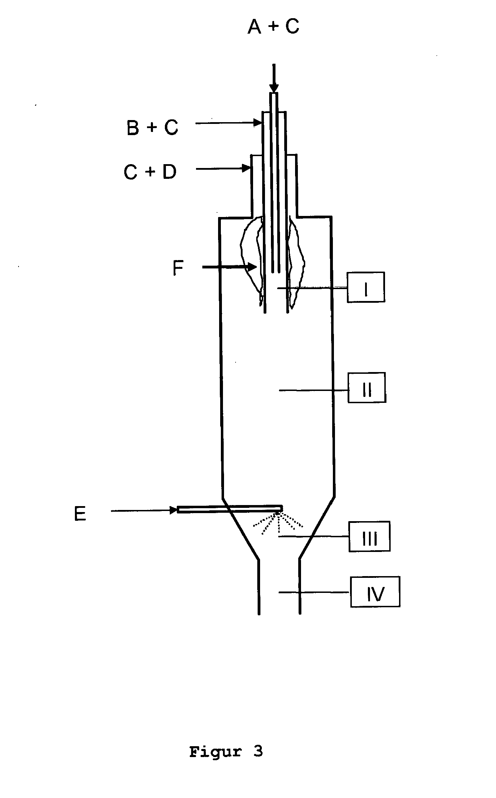

Figur 3 zeigt schematisch eine Ausführungsform des erfindungsgemäßen Verfahrens. Dabei steht
- A: für eine oder mehrere Eisenverbindungen;
- B: für ein oder mehrere Siliciumverbindungen;
- C: für ein Sauerstoff enthaltendes Gas, beispielsweise Luft, und/oder ein inertes Gas, beispielsweise Stickstoff;
- D: für ein wasserstoffhaltiges Brenngas, bevorzugt Wasserstoff;
- E: für Wasser;
- F: für die Flamme resultierend aus C+D, die in der Reaktionszone I keinen direkten Kontakt zu dem Gemisch aus A und B aufweist (indirekte Flamme);
- I: für die Reaktionszone I;
- II: für die Reaktionszone II,
- III: für die Kühlzone und
- IV: für die Abtrennzone.

Das erfindungsgemäße Verfahren kann bevorzugt mit einem Überschuss an Luft ausgeführt werden. Dieser Überschuss wird zweckmäßigerweise ausgedrückt als lambda, wobei lambda definiert ist als der Quotient aus dem Sauerstoffanteil des Sauerstoff enthaltenden Gases, dividiert durch den Sauerstoffbedarf, der zur vollständigen Oxidation des wasserstoffhaltigen Brenngases, der Eisen- und Siliciumverbindung erforderlich ist, jeweils in mol/h. Lambda = 1 entspricht demnach einer Menge an Sauerstoff, die gerade ausreichen würde das wasserstoffhaltige Brenngas und die Eisen- und Siliciumverbindung entsprechend der Stöchiometrie vollständig umsetzen. Bevorzugt wird bei der vorliegenden Erfindung ein lambda von 1,2 bis 2. Voraussetzung für das erfindungsgemäße Verfahren ist, dass die Siliciumverbindung und die Eisenverbindung hydrolysierbar und/oder oxidierbar ist. Geeignete Siliciumverbindungen können halogenierte Siliciumverbindungen wie SiCl₄, CH₃SiCl₃, (CH₃)₂SiCl₂, (CH₃)₃SiCl, (CH₃)₄Si, HSiCl₃, (CH₃)₂HSiCl, CH₃C₂H₅SiCl₂, Disilane mit der allgemeinen Formel RₙCl₃₋ₙSiSiRₘCl₃₋ₘ mit R=CH₃ und n+m = 2,3,4,5 und 6, oder Alkylsilane wie Si(OCH₃)₄ oder Si(OCH₂CH₃)₄ sein. Es können auch Gemische dieser Verbindungen eingesetzt werden. Bevorzugt werden SiCl₄ und/oder Si(OCH₂CH₃)₄ eingesetzt.

Bei den Eisenverbindungen kann es sich um organische oder anorganische Eisenverbindungen wie Chloride, Nitrate, Acetate, Carboxylate oder Alkoxide handeln. Bevorzugt jedoch wird Eisen(II)chlorid eingesetzt.

Die Eisenverbindung kommt bei dem erfindungsgemäßen Verfahren in Form eines Aerosoles zum Einsatz. Bei dem Aerosol handelt es sich um feinverteilte Flüssigkeitströpfchen. Die mittlere Tröpfchengröße beträgt vorzugsweise 0,1 bis 100 µm. Das Aerosol kann durch Verdüsen einer Lösung einer Eisenverbindung mittels eines Inertgases oder eines Sauerstoff enthaltenden Gases erhalten werden. Bei der Lösung handelt es sich vorzugsweise um eine wässerige Lösung mit einem Gehalt an Eisenverbindung, gerechnet als Fe₂O₃, von 10 bis 40 Gew.-%.

Ein weiterer Gegenstand der Erfindung ist die Verwendung der Eisen-Silicium-Oxidpartikel als Bestandteil von Kautschukmischungen, als Bestandteil von Polymerzubereitungen, als Bestandteil von Klebstoffzusammensetzungen, als Bestandteil von durch Schweißen im elektromagnetischen Wechselfeld erhältlichen Kunststoffverbundformkörpern und zur Herstellung von Dispersionen.

### Beispiele

### Analytik:

### Röntgendiffraktogramme

### Messung:

Reflexion, θ/θ-Diffraktometer, Co- Kα, U = 40kV, I = 35mA; Szintillationszähler, nachgestellter Graphitmonochromator Probendrehung
Blenden : 2 x 8mm, 1,0mm, 0,4mm
Winkelbereich (2Θ) / Schrittweite/ Meßzeit: 10 - 100° / 0,04° / 6s (4h)

### Auswertung:

SOP: QLPA-CSM, QNPA-Rietveld, CRYST-Rietveld

Die qualitative Phasenanalyse erfolgt anhand des PDF set 58 der ICDD-Datenbank PDF2 (2008).

Die quantitative Phasenanalyse und die

Kristallitgrößenbestimmung erfolgen mit dem Rietveld-Programm SiroQuant®, Version 3.0 (2005).

Die Figur 2 zeigt das Beugungsdiagramm der erfindungsgemäßen Eisen-Silicium-Oxidpartikel aus Beispiel 1.

Hämatit ist wegen der freistehenden Reflexe eindeutig identifizierbar. Die Reflexe des Magnetits und des Maghemits überlagern sehr stark. Der Maghemit ist signifikant anhand der Reflexe (110) und (211) im vorderen Winkelbereich nachweisbar.

Mit Hilfe der Rietveld- Methode wurde die quantitative Phasenanalyse ausgeführt (Fehler ca. 10% relativ). Sie gelingt bei Vorhandensein von Maghemit, wenn alle die Phasen Maghemit, Magnetit und Hämatit, einbezogen werden. Das generelle Gütemaß der Rietveldanalyse für dieses System ist ein R- Wert von max. ca. 0,3.

Des weiteren enthalten einige Proben ß-Fe₂O₃.

Die Vorgehensweise ist wie folgt:
- Untergrundkorrektur
- Verfeinerung des weitgehend von Überlagerungen freien Hämatits
- optimale Anpassung der nicht überlagerten Reflexe des Maghemits (vorderer Winkelbereich) in Lage und Halbwertsbreite der Reflexe
- Anpassung und Verfeinerung des Magnetits als Fe₃O₄ (keine Elementsubstitutionen).
- Das ß-Fe₂O₃ wird indirekt über die Auswertung der Überlagerung mit dem stärksten Hämatitreflex abgeschätzt.
- Der amorphe Eisenoxid-Anteil wird geschätzt.
- Die Kristallitgrößenbestimmung erfolgt innerhalb des Rietveldprogramms nach beendeter quantitativer Phasenanalyse, also auch der Anpassung der Reflexprofile. Als Geräteparameter wurde eine Halbwertsbreite von 0,12° angesetzt.

Beispiel 1 (gemäß Erfindung): Ein Aerosol mit einer mittleren Tröpfchengröße von < 90 µm, welches durch Verdüsen von 2 kg/h einer 25 prozentigen Lösung von Eisen(II)chlorid in Wasser und 3 Nm³/h Luft erhalten wird und eine Gemisch aus 0,15 kg/h dampfförmigem Siliciumtetrachlorid und 2 Nm³/h Luft werden in der Reaktionszone I des Reaktors vereinigt und mittels einer indirekten Flamme, gebildet aus 8 Nm³/h Wasserstoff und 20 Nm³/h Luft erhitzt. Die maximale Temperatur mit der das Gemisch die Reaktionszone I verlässt beträgt 1032°C, die mittlere Geschwindigkeit der laminaren Strömung 2,4 ms⁻¹, bei einer mittleren Verweilzeit von 0,4 s.

Dieses Gemisch wird in der Reaktionszone II mit dem Gemisch, welches aus der Umsetzung von Luft und Wasserstoff resultiert, in Kontakt gebracht. Die maximale Temperatur mit in der Reaktionszone II beträgt 1057°C, die mittlere Geschwindigkeit der laminaren Strömung 0,4 ms⁻¹, bei einer mittleren Verweilzeit von 5 s.

Dieses Gemisch wird in der Kühlzone durch Einbringen von 1,2 kg/h Wasser auf eine Temperatur von 241 °C abgekühlt. Nachfolgend wird der Feststoff an einem Filter abgetrennt.

Der Feststoff weist einen Anteil an Eisenoxid, gerechnet als Fe₂O₃ von 85 Gew.-% und einen Anteil an Siliciumdioxid von 15 Gew.-% auf.

Das erhaltene Pulver weist eine BET-Oberfläche von 13 m²/g. Die TEM-EDX-Analyse zeigt Partikel in sphäroider Form mit jeweils einem Abschnitt aus Eisenoxid und einem Abschnitt aus Siliciumdioxid. (Figur 1)

Aus dem Röntgenbeugungsdiagramm wird eine Zusammensetzung der Eisenoxidphasen 12 Gew.-% Maghemit, 85 Gew.-% Magnetit, 3 Gew.-% Hämatit bestimmt (Hämatit, Magnetit, Maghemit auf 100% normiert). Der amorphe Anteil an Eisenoxiden wird zu 10 Gew.-% geschätzt. Der Siliciumdioxidanteil ist röntgenamorph.

Beispiel 2 (gemäß Erfindung) wird analog durchgeführt. Einsatzstoffe und Reaktionsbedingungen, sowie physikalischchemische Daten des erhaltenen Produktes ist in Tabelle 1 wiedergegeben.

Beispiel 3 (Vergleichsbeispiel) wird analog dem beschriebenen Verfahren aus EP-A-1284485 durchgeführt. Einsatzstoffe und Reaktionsbedingungen, sowie physikalischchemische Daten des erhaltenen Produktes ist in Tabelle 1 wiedergegeben.

TEM-Aufnahmen der Pulver aus den Beispielen 1 und 2 belegen die "Janus"-förmige Struktur. Das Pulver aus Beispiel 3 weist diese Struktur nicht auf. Vielmehr zeigen TEM-Aufnahmen das Vorliegen von Primärpartikeln bei denen Eisenoxiddomänen in und auf einer Siliciumdioxidmatrix.

Die erfindungsgemäßen Pulver der Beispiele 1 und 2 weisen im magnetischen Wechselfeld eine maximal erreichbare Temperatur von 181°C beziehungsweise 213°C auf. Zur Bestimmung 200 mg Pulver mit 1,5 to verpresst. Die erhaltenen Tabletten hatten eine glatte Oberfläche und ausreichende Stabilität. Sie werden auf einem Objektträger auf den Induktor platziert und die Temperatur berührungslos vermessen. Die Messungen der maximal erreichbaren Temperatur werden an einem Mittelfrequenz-Gerät bei 40 kHz (P = 1,9 kW; PWM = 750 %; U = 560 V; t = 75 s; I = 3,4 A) durchgeführt. Die angegebenen erreichten Maximaltemperaturen sind Mittelwerte der Maximaltemperaturen von Messungen an mindestens zwei von jedem Muster angefertigten Tabletten.

**Tabelle:**

| **Einsatzstoffe und Reaktionsbedingungen; Stoffparameter** | | | | |
|---|---|---|---|---|
| | | **gemäß Erfindung** | | **Vergleich** |
| | | **1** | **2** | **3** |
| FeCl₂^{1,2} | kg/h | 2 | 4 | 7 |
| SiCl₄³ | kg/h | 0,15 | 0,3 | 0,53 |
| Luft | Nm³/h | 20 | 25 | 15 |
| H₂ | Nm³/h | 8 | 8 | 8 |
| Quenchwasser | kg/h | 1,2 | 2 | - |
| lambda | | 1, 31 | 1,58 | 1,58 |
| v_{RZ1}⁴ | ms⁻¹ | 2,4 | 3,5 | 4,2 |
| v_{RZ2}⁴ | ms⁻¹ | 0,4 | 0,3 | - |
| t_{RZ1}⁵ | s | 0,4 | 0,5 | 0,7 |
| t_{RZ2}⁵ | s | 5 | 4 | - |
| BET⁶ | m²/g | 13 | 35 | 62 |
| SiO₂ | Gew.-% | 15 | 15 | 15 |
| Fe₂O₃ | Gew.-% | 85 | 85 | 85 |
| Maghemit | % | 12 | 37 | 25 |
| Magnetit | % | 85 | 58 | 65 |
| Hämatit | % | 3 | 5 | 10 |
| Amorph | % | 10 | 19 | 25 |

| | | | | |
|---|---|---|---|---|
| 1) bezogen 25 gewichtsprozentige Lösung in Wasser; 2) + 3 Nm³/h Verdüsungsluft außer Beispiel 3: + 5 Nm³/h 3) + 2 Nm³/h Luft; außer Beispiel 3: 10 + 3 Nm³/h 4) mittlere Strömungsgeschwindigkeit; RZ1= Reaktionszone I; RZ2= Reaktionszone II; 5) mittlere Verweilzeit; RZ1= Reaktionszone I; RZII= Reaktionszone II 6) BET-Oberfläche nach DIN66131; | | | | |

## Patentansprüche

1. Eisen-Silicium-Oxidpartikel in sphärischer und/oder sphäroider Form, die zwei Abschnitte aufweisen, wobei ein Abschnitt im wesentlichen aus amorphem Siliciumdioxid und der andere Abschnitt im wesentlichen aus Eisenoxid besteht,
**dadurch gekennzeichnet, dass**
a) der Anteil an Siliciumdioxid oder Eisenoxid, berechnet als Fe₂O₃, 10 bis 90 Gew.-% beträgt,
b) der Eisenoxidanteil
5 bis 75 Gew.-% Maghemit,
20 bis 90 Gew.-% Magnetit,
0 bis 15 Gew.-% Hämatit,
0 bis 5 Gew.-% beta-Fe₂O₃ umfasst.

2. Eisen-Silicium-Oxidpartikel nach Anspruch 1,
**dadurch gekennzeichnet, dass**
der Anteil an Maghemit und Magnetit in Summe größer als 80 Gew.-%, bezogen auf den Eisenoxidanteil, ist.

3. Eisen-Silicium-Oxidpartikel nach den Ansprüchen 1 oder 2,
**dadurch gekennzeichnet, dass**
der Anteil an Eisenoxid 40 bis 90 Gew.-% und der Anteil an Siliciumdioxid 10 bis 60 Gew.-% ist.

4. Eisen-Silicium-Oxidpartikel nach den Ansprüchen 1 bis 3,
**dadurch gekennzeichnet, dass**
die BET-Oberfläche 1 bis 100 m²/g beträgt.

5. Verfahren zur Herstellung der Eisen-Silicium-Oxidpartikel gemäß der Ansprüche 1 bis 4,
**dadurch gekennzeichnet, dass**
man in einem die aufeinanderfolgenden Zonen Reaktionszone I, Reaktionszone II, Kühlzone und Abtrennzone umfassenden Reaktor
a) in der Reaktionszone I ein oder mehrere hydrolysierbare und/oder oxidierbare Siliciumverbindungen und ein Aerosol, das eine oder mehrere oxidierbare und/oder hydrolysierbare Eisenverbindungen enthält, in einem Verhältnis zusammenführt, dass das Gemisch 10 bis 90 Gew.-% der Eisenverbindungen, gerechnet als Fe₂O₃, und 90 bis 10 Gew.-% der Siliciumverbindungen, gerechnet als SiO₂, und jeweils bezogen auf die Summe der Eisen- und Siliciumverbindungen, enthält,
b) dieses Gemisch mittels einer indirekten Flamme verdampft, wobei die indirekte Flamme durch Zündung eines Gemisches, welches Luft oder mit Sauerstoff angereicherte Luft und ein oder mehrere wasserstoffhaltige Brenngase umfasst, enthält und wobei die Menge an Sauerstoff wenigstens ausreicht um eine vollständige Umsetzung der wasserstoffhaltigen Brenngase und der hydrolysierbaren und/oder oxidierbare Siliciumverbindungen und Eisenverbindungen zu gewährleisten, wobei man die apparativen Bedingungen so wählt, dass dieser Dampf in Form einer laminaren Strömung die Reaktionszone I verläßt, und
c) in die Reaktionszone II gelangt, wo er mit dem noch vorhandenen Sauerstoff und den Reaktionsprodukten, die bei der Erzeugung der indirekten Flamme gebildet werden, reagiert, wobei auch in der Reaktionszone II laminare Strömungsverhältnisse vorliegen, wobei die mittlere Verweilzeit des Reaktionsgemisches in der Reaktionszone II wenigstens 1 s ist,
d) anschließend in der Kühlzone das Reaktionsgemisch durch Einspeisung von Wasser auf Temperaturen von 200 bis 400°C kühlt, und
e) nachfolgend in der Abtrennzone den Feststoff von gas- oder dampfförmigen Stoffen abtrennt.

6. Verfahren nach Anspruch 5,
**dadurch gekennzeichnet, dass**
die laminare Strömung mit der der Dampf die Reaktionszone I verlässt eine mittlere Geschwindigkeit von 1 bis 4 ms⁻¹ aufweist.

7. Verfahren nach den Ansprüchen 5 oder 6,
**dadurch gekennzeichnet, dass**
die laminare Strömung in der Reaktionszone II eine mittlere Geschwindigkeit aufweist, die geringer ist als die in der Reaktionszone I.

8. Verfahren nach den Ansprüchen 5 bis 7,
**dadurch gekennzeichnet, dass**
die mittlere Verweildauer in der Reaktionszone II 1 bis 10 s ist.

9. Verfahren nach den Ansprüchen 5 bis 8,
**dadurch gekennzeichnet, dass**
lambda 1,2 bis 2 ist, wobei lambda definiert ist als der Quotient aus dem Sauerstoffanteil des Sauerstoff enthaltenden Gases, dividiert durch den Sauerstoffbedarf, der zur vollständigen Oxidation des wasserstoffhaltigen Brenngases, der Eisen- und Siliciumverbindung erforderlich ist, jeweils in mol/h.

10. Verfahren nach den Ansprüchen 5 bis 9,
**dadurch gekennzeichnet, dass**
die Siliciumverbindung zusammen mit einem Traggas in die Reaktionszone I gebracht wird.

11. Verfahren nach Anspruch 5 bis 10,
**dadurch gekennzeichnet, dass**
die Siliciumverbindung eine halogenierte Siliciumverbindung ist.

12. Verfahren nach den Ansprüchen 5 bis 11,
**dadurch gekennzeichnet, dass**
die Eisenverbindung Eisen(II)chlorid ist.

13. Verfahren nach den Ansprüchen 5 bis 12,
**dadurch gekennzeichnet, dass**
das Aerosol durch Verdüsen einer Lösung einer Eisenverbindung mittels eines Inertgases oder eines Sauerstoff enthaltenden Gases erhalten wird.

14. Verfahren nach Anspruch 13,
**dadurch gekennzeichnet, dass**
es sich bei der Lösung um eine wässerige Lösung mit einem Gehalt an Eisenverbindung, gerechnet als Fe2O3, von 10 bis 40 Gew.-% handelt.

15. Verwendung der Eisen-Silicium-Oxidpartikel gemäß den Ansprüchen 1 bis 4 als Bestandteil von Kautschukmischungen, als Bestandteil von Polymerzubereitungen, als Bestandteil von Klebstoffzusammensetzungen, als Bestandteil von durch Schweißen im elektromagnetischen Wechselfeld erhältlichen Kunststoffverbundformkörpern und zur Herstellung von Dispersionen.

## Claims

1. Iron-silicon oxide particles in spherical and/or spheroidal form, which have two sections, one section consisting essentially of amorphous silicon dioxide and the other section consisting essentially of iron oxide,
**characterized in that**
a) the fraction of silicon dioxide or iron oxide, calculated as Fe₂O₃, is 10% to 90% by weight, and
b) the iron oxide fraction comprises
5% to 75% by weight maghemite,
20% to 90% by weight magnetite,
0% to 15% by weight hematite and
0% to 5% by weight beta-Fe₂O₃.

2. Iron-silicon oxide particles according to Claim 1,
**characterized in that**
the fraction of maghemite and magnetite in total is greater than 80% by weight, based on the iron oxide fraction.

3. Iron-silicon oxide particles according to Claim 1 or 2,
**characterized in that**
the fraction of iron oxide is 40% to 90% by weight and the fraction of silicon dioxide is 10% to 60% by weight.

4. Iron-silicon oxide particles according to Claims 1 to 3,
**characterized in that**
the BET surface area is 1 to 100 m²/g.

5. Process for preparing the iron-silicon oxide particles according to Claims 1 to 4,
**characterized in that**
in a reactor comprising in succession reaction zone I, reaction zone II, cooling zone and separation zone,
a) in reaction zone I, one or more hydrolysable and/or oxidizable silicon compounds and an aerosol which comprises one or more oxidizable and/or hydrolysable iron compounds are combined in a ratio such that the mixture comprises 10% to 90% by weight of the iron compounds, calculated as Fe₂O₃, and 90% to 10% by weight of the silicon compounds, calculated as SiO₂, and based in each case on the sum of the iron compounds and silicon compounds,
b) this mixture is vaporized by means of an indirect flame, the indirect flame being obtained by ignition of a mixture which comprises air or oxygen-enriched air and one or more hydrogen-containing combustion gases, and the amount of oxygen being at least sufficient to ensure complete reaction of the hydrogen-containing combustion gases and the hydrolysable and/or oxidizable silicon compounds and iron compounds, the conditions in terms of apparatus being selected such that this vapour departs from reaction zone I in the form of a laminar flow and
c) enters reaction zone II, where it reacts with the remaining oxygen and with the reaction products formed in the generation of the indirect flame, there being laminar flow conditions present in reaction zone II as well, and the average residence time of the reaction mixture in reaction zone II being at least one 1 s,
d) subsequently, in the cooling zone, the reaction mixture cools to temperatures of 200 to 400°C by the feeding-in of water, and
e) thereafter, in the separating zone, the solid separates from gaseous or vaporous substances.

6. Process according to Claim 5,
**characterized in that**
the laminar flow with which the vapour departs from reaction zone I has an average velocity of 1 to 4 ms⁻¹.

7. Process according to Claim 5 or 6,
**characterized in that**
the laminar flow in reaction zone II has an average velocity which is lower than that in reaction zone I.

8. Process according to Claims 5 to 7,
**characterized in that**
the average residence time in reaction zone II is 1 to 10 s.

9. Process according to Claims 5 to 8,
**characterized in that**
lambda is 1.2 to 2, where lambda is defined as the ratio of the oxygen fraction of the oxygen-containing gas, divided by the oxygen consumption required for the full oxidation of the hydrogen-containing combustion gas, of the iron and silicon compound, in each case in mol/h.

10. Process according to Claims 5 to 9,
**characterized in that**
the silicon compound is brought, together with a carrier gas, into reaction zone I.

11. Process according to Claims 5 to 10,
**characterized in that**
the silicon compound is a halogen-containing silicon compound.

12. Process according to Claims 5 to 11,
**characterized in that**
the iron compound is iron(II) chloride.

13. Process according to Claims 5 to 12,
**characterized in that**
the aerosol is obtained by atomisation of a solution of an iron compound, by means of an inert gas or of an oxygen-containing gas.

14. Process according to Claim 13,
**characterized in that**
the solution is an aqueous solution having an iron compound content, calculated as Fe203, of 10% to 40% by weight.

15. Use of the iron-silicon oxide particles according to Claims 1 to 4 as a constituent of rubber mixtures, as a constituent of polymer preparations, as a constituent of adhesive compositions, as a constituent of composite polymeric mouldings obtainable by welding in an alternating electromagnetic field, and for preparing dispersions.

## Revendications

1. Particules d'oxyde de fer-silicium sous forme sphérique et/ou sphéroïde, qui comprennent deux sections, une section étant essentiellement constituée de dioxyde de silicium amorphe et l'autre section étant essentiellement constituée d'oxyde de fer, **caractérisées en ce que**
a) la proportion de dioxyde de silicium ou d'oxyde de fer, calculé en tant que Fe₂O₃, est de 10 à 90 % en poids,
b) la fraction d'oxyde de fer comprend
5 à 75 % en poids de maghémite,
20 à 90 % en poids de magnétite,
0 à 15 % en poids d'hématite,
0 à 5 % en poids de bêta-Fe₂O₃.

2. Particules d'oxyde de fer-silicium selon la revendication 1, **caractérisées en ce que** la proportion de maghémite et de magnétite en somme est supérieure à 80 % en poids, par rapport à la fraction d'oxyde de fer.

3. Particules d'oxyde de fer-silicium selon les revendications 1 ou 2, **caractérisées en ce que** la proportion d'oxyde de fer est de 40 à 90 % en poids et la proportion de dioxyde de silicium est de 10 à 60 % en poids.

4. Particules d'oxyde de fer-silicium selon les revendications 1 à 3, **caractérisées en ce que** la surface BET est de 1 à 100 m²/g.

5. Procédé de fabrication des particules d'oxyde de fer-silicium selon les revendications 1 à 4, **caractérisé en ce que**, dans un réacteur comprenant les zones successives zone de réaction I, zone de réaction II, zone de refroidissement et zone de séparation,
a) un ou plusieurs composés de silicium hydrolysables et/ou oxydables et un aérosol, qui contient un ou plusieurs composés de fer oxydables et/ou hydrolysables, sont réunis dans la zone de réaction I en un rapport tel que le mélange contienne 10 à 90 % en poids des composés de fer, calculés en tant que Fe₂O₃, et 90 à 10 % en poids des composés de silicium, calculés en tant que SiO₂, à chaque fois par rapport à la somme des composés de fer et de silicium,
b) ce mélange est évaporé au moyen d'une flamme indirecte, la flamme indirecte étant obtenue par allumage d'un mélange qui comprend de l'air ou de l'air enrichi en oxygène et un ou plusieurs gaz de combustion contenant de l'hydrogène, et la quantité d'oxygène étant au moins suffisante pour assurer une réaction totale des gaz de combustion contenant de l'hydrogène et des composés de silicium et des composés de fer hydrolysables et/ou oxydables, les conditions techniques étant choisies de sorte que cette vapeur quitte la zone de réaction I sous la forme d'un écoulement laminaire, et
c) atteigne la zone de réaction II, où elle réagit avec l'oxygène encore présent et les produits de réaction formés lors de la génération de la flamme indirecte, des conditions d'écoulement laminaires étant également présentes dans la zone de réaction II, le temps de séjour moyen du mélange réactionnel dans la zone de réaction II étant d'au moins 1 s, puis
d) le mélange réactionnel est refroidi dans la zone de refroidissement par introduction d'eau à des températures de 200 à 400 °C, puis
e) le solide est séparé des matières gazeuses ou sous forme vapeur dans la zone de séparation.

6. Procédé selon la revendication 5, **caractérisé en ce que** l'écoulement laminaire avec lequel la vapeur quitte la zone de réaction I présente une vitesse moyenne de 1 à 4 ms⁻¹.

7. Procédé selon les revendications 5 ou 6, **caractérisé en ce que** l'écoulement laminaire dans la zone de réaction II présente une vitesse moyenne qui est plus faible que celle dans la zone de réaction I.

8. Procédé selon les revendications 5 à 7, **caractérisé en ce que** le temps de séjour moyen dans la zone de réaction II est de 1 à 10 s.

9. Procédé selon les revendications 5 à 8, **caractérisé en ce que** lambda est de 1,2 à 2, lambda étant défini comme le quotient de la proportion d'oxygène du gaz contenant de l'oxygène divisée par la demande en oxygène qui est nécessaire pour l'oxydation totale du gaz de combustion contenant de l'hydrogène, des composés de fer et de silicium, à chaque fois en mol/h.

10. Procédé selon les revendications 5 à 9, **caractérisé en ce que** le composé de silicium est introduit dans la zone de réaction I conjointement avec un gaz vecteur.

11. Procédé selon les revendications 5 à 10, **caractérisé en ce que** le composé de silicium est un composé de silicium halogéné.

12. Procédé selon les revendications 5 à 11, **caractérisé en ce que** le composé de fer est du chlorure de fer (II).

13. Procédé selon les revendications 5 à 12, **caractérisé en ce que** l'aérosol est obtenu par atomisation d'une solution d'un composé de fer au moyen d'un gaz inerte ou d'un gaz contenant de l'oxygène.

14. Procédé selon la revendication 13, **caractérisé en ce que** la solution est une solution aqueuse ayant une teneur en composé de fer, calculé en tant que Fe₂O₃, de 10 à 40 % en poids.

15. Utilisation des particules d'oxyde de fer-silicium selon les revendications 1 à 4 en tant que constituant de mélanges de caoutchouc, en tant que constituant de préparations polymères, en tant que constituant de compositions adhésives, en tant que constituant de corps moulés composites plastiques pouvant être obtenus par soudure dans le champ alternatif électromagnétique et pour la fabrication de dispersions.
